# EUROPEAN PATENT APPLICATION

(11) **EP 2 284 639 A1**
(43) Date of publication of application: **16.02.2011**
(21) Application number: 09167584.3
(22) Date of filing: 11.08.2009
(51) Int. Cl.: G05F 1/67, H02J 3/38, H02M 7/48

(54) **Power converter assembly for solar power plant**

(71) Applicant: ABB Research Ltd., 8050 Zürich (CH)
(72) Inventor: Coccia, Antonio, 8050 Zürich (CH); Canales, Francisco, 8050 Zürich (CH); Serpa, Leonardo-Augusto, 8050 Zürich (CH); Paakkinen, Mikko, 8050 Zürich (CH)
(74) Representative: Valkeiskangas, Tapio Lassi Paavali

(57) **Abstract**

A power converter assembly for a solar power plant comprising boost converter means, direct current bus bar means and control means, the boost converter means comprising a plurality of boost converter blocks each having a direct current input adapted to be connected to a photovoltaic array, each one of the boost converter blocks including at least one boost converter unit (BCU1, BCU2, BCU3), each one of the boost converter units (BCU1, BCU2, BCU3) being adapted to step up direct voltage and to feed the stepped up direct voltage into the direct current bus bar means, the control means being adapted to control operation of the boost converter units (BCU1, BCU2, BCU3). Control means are adapted ( i ) to monitor an input power fed into each boost converter block; ( ii ) to decide, based on said monitoring, a required number of active boost converter units for each boost converter block, and to turn off any redundant boost converter units in the boost converter blocks; and ( iii ) to adjust a phase shift between active boost converter units (BCU1, BCU2, BCU3) of each boost converter block into a value substantially equal to quotient of 2π radians and the number of active boost converter units in the boost converter block.

## Description

### FIELD OF THE INVENTION

The present invention relates to a power converter assembly for a solar power plant, the power converter assembly comprising means for raising dc voltage.

Power generated by a solar plant fluctuates heavily depending on insolation. Therefore it is challenging to design a power converter assembly for a solar power plant such that operating efficiency is high in all operating conditions.

### BRIEF DESCRIPTION OF THE INVENTION

An object of the present invention is to provide a power converter assembly for a solar power plant having a high operating efficiency both at full insolation and at partial insolation. The object of the invention is achieved by power converter assemblies defined in independent claims. The preferred embodiments of the invention are disclosed in the dependent claims.

The invention is based on the idea of control means that are adapted at partial load operating situations to turn off redundant boost converter units in order to save energy, and to optimize a phase shift between individual active boost converter units.

An advantage of the power converter assembly of the invention is that energy is saved by turning off redundant boost converter units. Another advantage is that lower ripple currents are achieved by adjusting the phase shifts. Further, adjusting the phase shifts raises ripple current frequency and thus makes EMI filtering easier.

### BRIEF DESCRIPTION OF THE DRAWINGS

In the following the invention will be described in greater detail by means of preferred embodiments with reference to the attached drawings, in which
Figure 1 shows a power converter assembly having three converter modules each connected to a separate photovoltaic array;
Figure 2 shows an embodiment of a converter module; and
Figure 3 shows a power converter assembly having two converter modules connected to a common photovoltaic array.

### DETAILED DESCRIPTION OF THE INVENTION

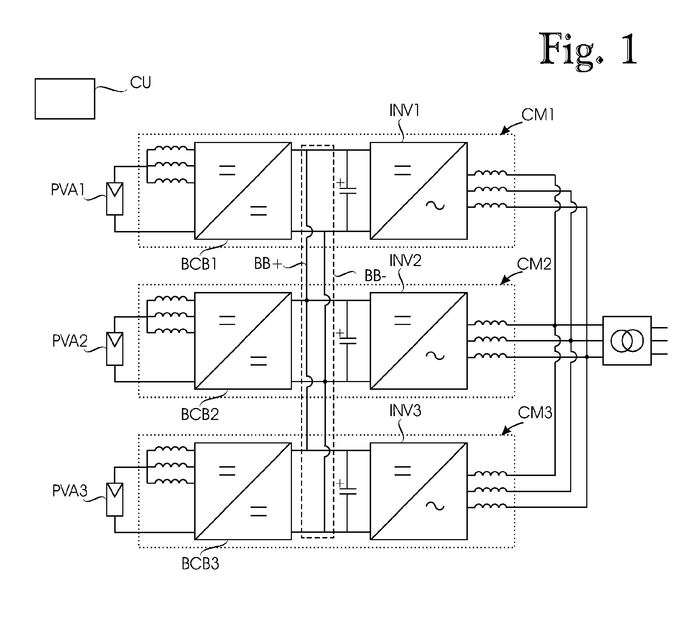

A power converter assembly of Figure 1 comprises boost converter means, direct current bus bar means, inverter means and control means. The boost converter means comprise boost converter blocks BCB1, BCB2 and BCB3. Each of said boost converter blocks has a direct current input connected to a separate photovoltaic array. The direct current input of boost converter block BCB1 is connected to a photovoltaic array PVA1, the direct current input of boost converter block BCB2 is connected to a photovoltaic array PVA2, and the direct current input of boost converter block BCB3 is connected to a photovoltaic array PVA3. Each one of the boost converter blocks BCB1, BCB2 and BCB3 includes three boost converter units, each one of the boost converter units being adapted to step up direct voltage and to feed the stepped up direct voltage into the direct current bus bar means. The outputs of boost converter units are connected in parallel.

The direct current bus bar means comprise a positive voltage bus bar BB+ and a negative voltage bus bar BB-. The control means are adapted to control operation of the boost converter units. Each boost converter block is operated as an independent maximum power point tracker. Further, the control means are adapted to control the boost converter units of each individual converter module such that the boost converter units of said individual converter module have a same duty cycle. The control means comprise control unit CU. Signal paths between the control unit CU and boost converter units are not depicted.

The control means are adapted to monitor an input power fed into each boost converter block. Based on said monitoring the control means are adapted to decide a required number of active boost converter units for each boost converter block, and to turn off any redundant boost converter units in the boost converter blocks. The required number of active boost converter units means the number of boost converter units that is needed to handle the input power fed by a corresponding photovoltaic array into the boost converter block.

The control means are adapted to adjust a phase shift between active boost converter units of each boost converter block into a value substantially equal to quotient of 2π radians and the number of active boost converter units. This adjustment reduces ripple in the direct current input of each boost converter block.

The inverter means comprise an inverter block for each converter module. Converter module CM1 includes inverter block INV1, converter module CM2 includes inverter block INV2, and converter module CM3 includes inverter block INV3. Each inverter block is adapted to convert a direct voltage into an alternating voltage and has a direct voltage input connected to the direct current bus bar means.

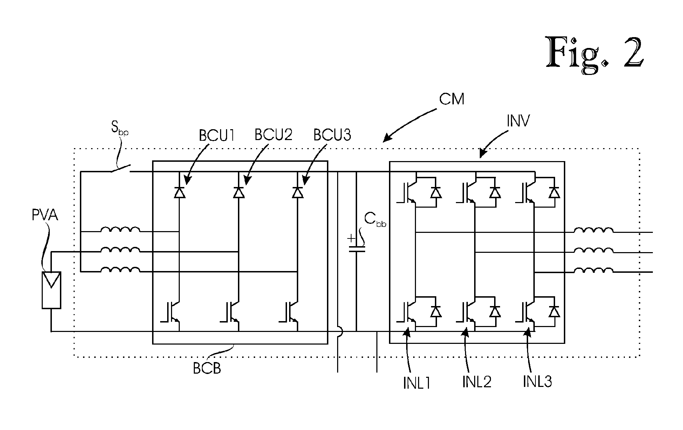

Figure 2 shows a converter module CM having three boost converter units in a boost converter block BCB. The boost converter units BCU1, BCU2 and BCU3 are conventional two-level boost converter units. The boost converter block BCB is equipped with a bypass switch S_{bp} which is adapted to be controlled by the control means selectively in an open state and a closed state. The closed state of the bypass switch S_{bp} bypasses all boost converter units of the boost converter block BCB, such that a voltage inputted into the boost converter means is conducted directly into the direct current bus bar means without being stepped up.

When boost converter blocks of a power converter assembly are equipped with bypass switches, the control means are preferably adapted to turn off all boost converter units of a boost converter block whose bypass switch is in the closed state. The control means may be adapted to monitor a voltage in an input of each boost converter block and to close a bypass switch of any boost converter block the monitored voltage of which is higher than a predetermined threshold value.

The inverter block INV of converter module CM shown in Figure 2 is a conventional two-level three-phase inverter stage. The inverter block INV has three inverter legs, namely INL1, INL2 and INL3.

In an alternative embodiment each converter module comprises a plurality of inverter blocks. In such an alternative embodiment each inverter block of a converter module may be equipped with a bypass switch wherein the control means are adapted to decide a required number of active inverter blocks for the converter module and to turn off redundant inverter blocks.

Above it has been described how a phase shift between boost converter units of individual boost converter block is managed. In many embodiments it is also important to manage phase shifts between boost converter units of different converter modules. This management enables reducing of ripple currents in capacitors connected to the direct current bus bar means. In Figure 2 a capacitor connected to the direct current bus bar means is denoted as C_{bb}.

In an embodiment the control means are adapted to split each switching cycle of the boost converter means into plurality of cycle slices having equal length, the number of said cycle slices being equal to the number of active boost converter units in the power converter assembly. If the number of active boost converter units changes, also the number of cycle slices in the switching cycle changes. The control means are adapted to number active boost converter blocks of the power converter assembly sequentially starting from one, to trigger the first active boost converter unit of the first boost converter block at an edge of a first cycle slice, and to trigger the first active boost converter unit of each subsequent boost converter block at an edge of a cycle slice whose sequence number is equal to a total number of active boost converter units in boost converter blocks having sequence number smaller than the sequence number of said subsequent boost converter block.

Here is an example of managing phase shifts between different boost converter blocks. At a certain moment a power converter assembly has four active boost converter blocks, BCB1', BCB2', BCB3' and BCB4'. Boost converter block BCB1' and boost converter block BCB2' have three active boost converter units each, boost converter block BCB3' has two active boost converter units, and boost converter block BCB4' only has one active boost converter unit. The control means split each switching cycle into nine (3 + 3 + 2 + 1) cycle slices having equal length. The control means trigger the first active boost converter unit of boost converter block BCB1' at an edge of a first cycle slice, the first active boost converter unit of boost converter block BCB2' at an edge of a third cycle slice, the first active boost converter unit of boost converter block BCB3' at an edge of a sixth cycle slice, and the active boost converter unit of boost converter block BCB4' at an edge of a eighth cycle slice. The internal phase shift between boost converter units of BCB1' and BCB2' is 120°, and the internal phase shift between boost converter units of BCB3' is 180°.

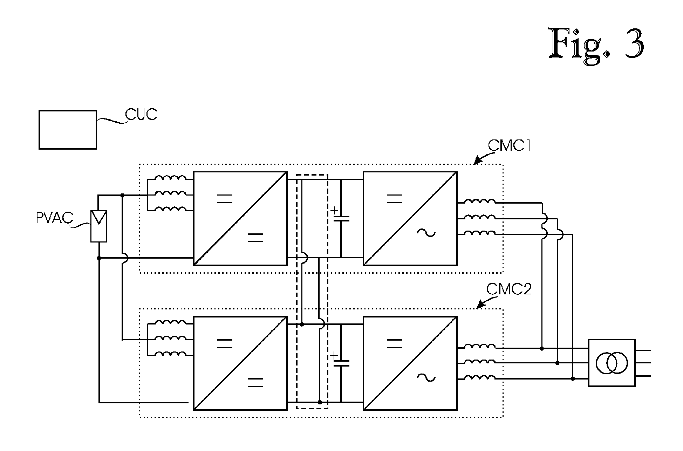

The power converter assembly of Figure 3 comprises boost converter means, direct current bus bar means, inverter means and control means. The boost converter means comprise six boost converter units installed in two converter modules. Both a converter module CMC1 and a converter module CMC2 include three boost converter units. Converter modules CMC1 and CMC2 have a common direct current input connected to a common photovoltaic array PVAC.

Boost converter units of converter modules CMC1 and CMC2 are adapted to step up direct voltage and to feed the stepped up direct voltage into the direct current bus bar means. The control means are adapted to monitor an input power fed into the common direct current input of the converter modules, to decide, based on said monitored input power, a required number of active boost converter units and to turn off any redundant boost converter units, and to adjust a phase shift between the active boost converter units into a value substantially equal to quotient of 2π radians and the number of active boost converter units. The control means are adapted to control the boost converter means as one maximum power point tracker. All active boost converter units have the same duty cycle. The control means comprise control unit CUC.

Each converter module of Figure 3 may be of the type shown in Figure 2. Accordingly, either converter module of Figure 3 may be equipped with a bypass switch adapted to bypass all boost converter units of the converter module. Also, any one of the converter modules CMC1 and CMC2 could be equipped with a plurality of inverter blocks wherein the converter module may have a bypass switch for each inverter block.

In the embodiment of Figure 3 each converter module has a housing of its own. However, in an alternative embodiment all boost converter units and inverter blocks of the power converter assembly could be installed in a single housing. Further, one skilled in the art understands that any of the converter modules in Figure 1 could be replaced by a power converter assembly shown in Figure 3, naturally assuming that programming of the control means is updated accordingly.

Both the power converter assembly shown in Figure 1 and the power converter assembly shown in Figure 3 have a centralized control unit, which is denoted as CU in Figure 1 and as CUC in Figure 3. Alternatively it is possible to utilize a decentralized controlling, and to equip each converter module with own control unit, wherein one of the control units acts as a master controller and the rest of the control units act as slave controllers. Control means may also comprise both a centralized control unit and several sub control units each installed in a corresponding converter module.

It will be obvious to a person skilled in the art that the inventive concept can be implemented in various ways. The invention and its embodiments are not limited to the examples described above but may vary within the scope of the claims.

## Claims

1. A power converter assembly for a solar power plant comprising boost converter means, direct current bus bar means and control means, the boost converter means comprising a plurality of boost converter blocks each having a direct current input adapted to be connected to a photovoltaic array, each one of the boost converter blocks including at least one boost converter unit (BCU1, BCU2, BCU3), each one of the boost converter units (BCU1, BCU2, BCU3) being adapted to step up direct voltage and to feed the stepped up direct voltage into the direct current bus bar means, the control means being adapted to control operation of the boost converter units (BCU1, BCU2, BCU3), **characterized in that** control means are adapted
( i ) to monitor an input power fed into each boost converter block;
( ii ) to decide, based on said monitoring, a required number of active boost converter units for each boost converter block, and to turn off any redundant boost converter units in the boost converter blocks; and
( iii ) to adjust a phase shift between active boost converter units (BCU1, BCU2, BCU3) of each boost converter block into a value substantially equal to quotient of 2π radians and the number of active boost converter units in the boost converter block.

2. A power converter assembly according to claim 1, **characterized in that** the control means are adapted to control the boost converter units (BCU1, BCU2, BCU3) of each of the boost converter blocks (BCB1, BCB2, BCB3) such that each boost converter block operates as an independent maximum power point tracker.

3. A power converter assembly according to any preceding claim, **characterized in that** the control means are adapted to split each switching cycle of the boost converter means into plurality of cycle slices having equal length, the number of said cycle slices being equal to the total number of active boost converter units in the power converter assembly, the control means are further being adapted to number active boost converter blocks of the power converter assembly sequentially starting from one, to trigger the first active boost converter unit of the first boost converter block at an edge of a first cycle slice, and to trigger the first active boost converter unit of each subsequent boost converter block at an edge of a cycle slice whose sequence number is equal to a number of active boost converter units in boost converter blocks having sequence number smaller than the sequence number of said subsequent boost converter block.

4. A power converter assembly according to any preceding claim, **characterized in that** the boost converter means comprise a bypass switch (S_{bp}) for each boost converter block, the bypass switch (S_{bp}) being adapted to be controlled by the control means selectively in an open state and a closed state, the closed state of the bypass switch (S_{bp}) bypassing the boost converter units of the boost converter block, the control means being adapted to turn off the boost converter units of bypassed boost converter blocks as redundant.

5. A power converter assembly according to claim 4, **characterized in that** the control means are adapted to monitor a voltage in an input of each boost converter block and to close a bypass switch (S_{bp}) of any boost converter block the monitored input voltage of which is higher than a predetermined threshold value.

6. A power converter assembly according to any preceding claim, **characterized in that** the control means are adapted to control the boost converter units (BCU1, BCU2, BCU3) of each individual boost converter block such that the boost converter units (BCU1, BCU2, BCU3) of said individual boost converter block have a same duty cycle.

7. A power converter assembly according to any preceding claim, **characterized in that** the power converter assembly further comprises inverter means having a plurality of inverter blocks (INV1) each one of which being adapted to convert a direct voltage into an alternating voltage and having a direct voltage input connected to the direct current bus bar means, the control means being adapted to decide a required number of active inverter blocks and to turn off any redundant inverter blocks.

8. A power converter assembly for a solar power plant comprising boost converter means, direct current bus bar means and control means, the boost converter means comprising a plurality of boost converter units (BCU1, BCU2, BCU3) having a common direct current input adapted to be connected to a common photovoltaic array (PVAC), each one of the boost converter units (BCU1, BCU2, BCU3) being adapted to step up direct voltage and to feed the stepped up direct voltage into the direct current bus bar means, the control means being adapted to control operation of the boost converter units (BCU1, BCU2, BCU3), **characterized in that** the control means are adapted
( i ) to monitor an input power fed into the common direct current input;
( ii ) to decide, based on said monitored input power, a required number of active boost converter units and to turn off redundant boost converter units; and
( iii ) to adjust a phase shift between the active boost converter units into a value substantially equal to quotient of 2π radians and the number of active boost converter units.

9. A power converter assembly according to claim 8, **characterized in that** the control means are adapted to control the boost converter means as a single maximum power point tracker.

10. A power converter assembly according to claim 8 or 9, **characterized in that** the boost converter means comprise a bypass switch (S_{bp}) which is controlled by the control means selectively in an open state and a closed state, the closed state of the bypass switch (S_{bp}) bypassing the boost converter units such that a voltage inputted into the boost converter means is conducted directly into the direct current bus bar means without being stepped up, the control means further being adapted to turn off the boost converter units as redundant when bypass switch (S_{bp}) is in the closed state.

11. A power converter assembly according to claim 10, **characterized in that** the control means are adapted to monitor a voltage in the common direct current input and to close the bypass switch (S_{bp}) when said monitored voltage is higher than a predetermined threshold value.

12. A power converter assembly according to any of claims 8 to 11, **characterized in that** the control means are adapted to control the plurality of boost converter units such that each of the plurality of boost converter units has a same duty cycle.
